# EUROPÄISCHE PATENTANMELDUNG

(11) **EP 2 523 396 A2**
(43) Veröffentlichungstag der Anmeldung: **14.11.2012**
(21) Anmeldenummer: 12003591.0
(22) Anmeldetag: 08.05.2012
(51) Int. Cl.: H04L 12/28, H04L 29/08

(54) **Tragbares Anzeige- und Bediengerät**

(30) Priorität: 12.05.2011 DE 102011101387
(71) Anmelder: ABB AG, 68309 Mannheim (DE)
(72) Erfinder: Kruppa, Christian, 44649 Herne (DE); Krummel, Holger, 44789 Bochum (DE); Szkudlarek, Thomas, 45665 Recklinghausen (DE)

(57) **Zusammenfassung**

Es wird ein tragbares Anzeige- und Bediengerät (1) mit einer Kamera (2), einem Display (3), einer Verarbeitungs-/Speichereinrichtung (19), einer autarken Energieversorgung (6) und einer drahtlosen Schnittstelle (4) vorgeschlagen, welche eine bidirektionale drahtlose Datenverbindung (5) zu einer drahtlosen Schnittstelle (16) der Gebäudesystemtechnik herstellt, welche einen Bus (17) mit mehreren daran angeschlossenen Bediengeräten (7, 8) zur Ansteuerung von an den Bus (17) angeschlossenen Aktoren (12, 13) umfasst, an welche anzusteuernde elektrische Geräte (10, 11) angeschlossen sind,
• wobei das Display (3) das aktuell mittels der Kamera (2) aufgenommene Bild eines Raumes oder Teil eines Raumes zeigt,
• wobei die Verarbeitungs- und Speichereinrichtung (19) Abbilder von im Raum physikalisch vorhandenen Bediengeräten (7, 8) der Gebäudesystemtechnik auf Basis angelernter und abgespeicherter Zuordnungen erkennt,
• wobei Schalthandlungen, wie Einschalten / Ausschalten / Dimmen eines an einen Aktor (12, 13) angeschlossenen elektrischen Gerätes (10, 11) durch Berührung des Abbildes durchführbar sind.

## Beschreibung

Die Erfindung betrifft ein tragbares Anzeige- und Bediengerät und kann bei der Gebäudesystemtechnik, wie KNX-Installationen Anwendung finden. Unter einem tragbaren Anzeige- und Bediengerät wird ein allgemeines tragbares Gerät, beispielsweise auch ein PDA, ein Mobilfunktelefon, ein iPad verstanden.

Aus der EP 1 881 649 A2 ist ein Anzeige- und Bediengerät der Gebäudesystemtechnik bekannt, welches über eine Verarbeitungseinrichtung und ein Bussystem mit Aktoren verbunden ist, wobei jedem Aktor eine bestimmte Adresse innerhalb des Bussystems zugeordnet ist und an jeden Aktor mindestens ein elektrisches Gerät angeschlossen ist, welches ein Touchscreen-Element für die Ansteuerung der elektrischen Geräte aufweist, wobei auf dem Touchscreen-Element mindestens ein Raum eines Hauses oder ein Teilbereich eines Raumes in Form eines Fotos abgebildet ist, auf welchem die anzusteuernden elektrischen Geräte dieses Raumes erkennbar sind. Über die Verarbeitungseinrichtung ist die Foto-Abbildungsfläche eines bestimmten elektrischen Gerätes einer dem Aktor dieses elektrischen Gerätes zugeordneten Adresse zugewiesen. Bei Berührung der Foto-Abbildungsfläche wird über die Verarbeitungsfläche eine gewünschte Aktor-Funktion umgesetzt. Zum Aufwärts-Dimmen respektive Abwärts-Dimmen einer Beleuchtung wird über die Foto-Abbildungsfläche des anzusteuernden Gerätes von unten nach oben respektive von oben nach unten gestrichen.

Zur Nutzung dieses bekannten Anzeige- und Bediengerät der Gebäudesystemtechnik durch einen Anwender muss sich das fest installierte Gerät in Reichweite des Nutzers befinden. Ferner müssen zur Montage des Anzeige- und Bediengerät an/in der Wand Leitungen für den Anschluss an einen Bus verlegt werden sowie eine Unterputz-Gerätedose zur Aufnahme des Installationsgerätes montiert werden.

Der Erfindung liegt die Aufgabe zugrunde, ein tragbares Anzeige- und Bediengerät anzugeben, welches eine Ansteuerung von Geräten der Gebäudesystemtechnik ermöglicht.

Diese Aufgabe wird erfindungsgemäß gelöst durch ein tragbares Anzeige- und Bediengerät mit einer Kamera, einem Display, einer Verarbeitungs-/Speichereinrichtung, einer autarken Energieversorgung und einer drahtlosen Schnittstelle, welche eine bidirektionale drahtlose Datenverbindung zu einer drahtlosen Schnittstelle der Gebäudesystemtechnik herstellt, welche einen Bus mit mehreren daran angeschlossenen Bediengeräten zur Ansteuerung von an den Bus angeschlossenen Aktoren umfasst, an welche anzusteuernde elektrische Geräte angeschlossen sind,
● wobei das Display das aktuell mittels der Kamera aufgenommene Bild eines Raumes oder Teil eines Raumes zeigt,
● wobei die Verarbeitungs- und Speichereinrichtung Abbilder von im Raum physikalisch vorhandenen Bediengeräten der Gebäudesystemtechnik auf Basis angelernter und abgespeicherter Zuordnungen erkennt,
● wobei Schalthandlungen, wie Einschalten / Ausschalten / Dimmen eines an einen Aktor angeschlossenen elektrischen Gerätes durch Berührung des Abbildes durchführbar sind.

Der Bus kann dabei sowohl drahtgebundene als auch drahtlose Medien der Gebäudesystemtechnik umfassen.

Die mit der Erfindung erzielbaren Vorteile liegen insbesondere darin, dass die Zuordnung zwischen einem realen Bediengerät und seinem über die Kamera erfassten Abbild für einen Nutzer offensichtlich und eindeutig ist, ohne dass hierzu zunächst Menütexte und Begriffe gelesen oder Symbole identifiziert und verstanden werden müssten. Es ist eine drahtlose Ansteuerung von elektrischen Geräten in sehr komfortabler Art und Weise von beliebiger Stelle eines Raumes aus möglich, d. h. das physikalisch im Raum vorhandene, für die gewünschte Schalthandlung zuständige Bediengerät kann sich außerhalb der Reichweite des Nutzers befinden. Dabei sind keinerlei zusätzliche Leitungen bzw. sonstige Montagearbeiten, wie Installation einer handelsüblichen Unterputz-Gerätedose, erforderlich.

Gemäß einer Weiterbildung der Erfindung hebt die Verarbeitungs- und Speichereinrichtung die erkannten Abbilder von im Raum physikalisch vorhandenen Bediengeräten der Gebäudesystemtechnik im Bild des Displays in vorteilhafter Weise visuell hervor. Hierdurch wird die Bedienung von Bediengeräten respektive Beaufschlagung ihrer Abbilder vereinfacht.

Vorteilhaft bringt in weiterer Ausgestaltung der Erfindung die Verarbeitungs- und Speichereinrichtung den aktuellen Status eines erkannten Abbildes eines im Raum physikalisch vorhandenen Bediengerätes der Gebäudesystemtechnik im Bild des Displays zur Anzeige. Hierdurch wird dem Nutzer eine Entscheidungshilfe für die Ansteuerung der im Raum befindlichen anzusteuernden elektrischen Geräte an die Hand gegeben.

Eine zusätzliche Ausgestaltung der Erfindung besteht darin, dass beliebige Objekte zu virtuellen Bediengeräten auf Basis angelernter und abgespeicherter Zuordnungen deklariert sind und eine Verknüpfung zwischen einem vorhandenen Bediengerät und dem deklarierten Objekt, z. B. einer Deckenleuchte, hergestellt ist. Hierdurch wird die Bedienung von im Raum befindlichen anzusteuernden elektrischen Geräten - dies sind die "beliebigen Objekte" - wesentlich vereinfacht. Es ist nicht mehr erforderlich, das zugeordnete Bediengerät aufzufinden, um es wie gewünscht zu beaufschlagen.

Die Erfindung wird nachstehend an Hand der in der Zeichnung dargestellten Ausführungsbeispiele erläutert. Es zeigen:
- Fig. 1: ein tragbares Anzeige- und Bediengerät,
- Fig. 2: eine Installation der Gebäudesystemtechnik mit fest installierten Bediengeräten, Aktoren, anzusteuernden elektrischen Geräten und einem tragbaren Anzeige- und Bediengerät.

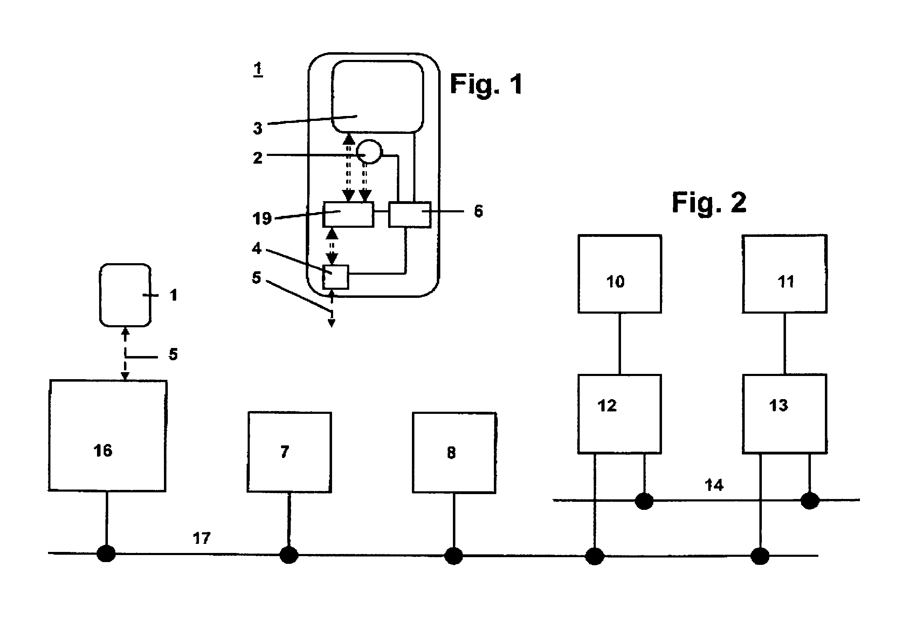

In Fig. 2 ist eine Installation der Gebäudesystemtechnik mit fest installierten Bediengeräten, Aktoren, anzusteuernden elektrischen Geräten und einem tragbaren Anzeige- und Bediengerät dargestellt. Die gezeigte Installation weist mehrere an einen Bus 17 der Gebäudesystemtechnik angeschlossene, fest installierte Bediengeräte 7, 8 usw. der Gebäudesystemtechnik auf, wie beispielsweise Wandschalter und/oder Dimmer und/oder KNX-Sensoren sowie mehrere Aktoren 12, 13 usw. der Gebäudesystemtechnik. Diese Aktoren 12, 13 usw. sind andererseits an ein Wechselspannungsnetz 14 (vorzugsweise ein 230V-Netz) angeschlossen. Ausgangsseitig sind die Aktoren 12, 13 usw. mit anzusteuernden elektrischen Geräten 10, 11 usw. verbunden, wie z. B. Leuchten und/oder Deckenlampen Beim Bus 17 bzw. bei den Geräten handelt es sich wahlweise auch um einen Funk-basierten Bus (im Unterschied zu einem drahtgebundenen Bus), wie beispielsweise KNX-RF bzw. um Funkgebundene Geräte.

Eine Betätigung eines Bediengerätes 7, 8 usw. führt durch entsprechende Datenübertragung über den Bus 17 (drahtgebunden oder drahtlos) zu einer entsprechenden Beaufschlagung des zugeordneten Aktors 12, 13 usw. und damit zu einer Schalthandlung, wie einem Einschalten / Ausschalten / Dimmen des an den Aktor angeschlossenen elektrischen Gerätes 10, 11 usw. unter Einbezug des Wechselspannungsnetzes 14. Selbstverständlich ist für die eindeutige Datenübertragung jedem Aktor eine bestimmte Adresse innerhalb des Bussystems zugeordnet, wie allgemein bekannt und üblich.

An den Bus 17 ist ferner eine drahtlose Schnittstelle 16 (Gateway-Gerät) der Gebäudesystemtechnik angeschlossen, welche dazu dient, zumindest einem tragbaren (mobilen) Anzeige- und Bediengerät 1 über eine drahtlose Datenverbindung 5 (quasi via Funk) einen Datenzugang / Datenaustausch mit der Gebäudesystemtechnik respektive mit drahtgebundenen / drahtlosen Medien der Gebäudesystemtechnik zu ermöglichen.

In Fig. 1 ist ein derartiges tragbares (mobiles) Anzeige- und Bediengerät 1 dargestellt, welches eine Kamera 2, ein Display 3, insbesondere in Form eines TouchScreen ausgebildet, eine drahtlose Schnittstelle 4 zur Gebäudesystemtechnik, eine Verarbeitungs- /Speichereinrichtung 19 und eine autarke Energieversorgung 6, z. B. eine Langzeit-Batterie oder einen Akkumulator aufweist. Die autarke Energieversorgung 6 speist Kamera 2, Display 3, drahtlose Schnittstelle 4 und Verarbeitungs-/Speichereinrichtung 19. Die Verarbeitungs- /Speichereinrichtung 19 ist für den Datenaustausch mit der Kamera 2, dem Display 3 und der drahtlosen Schnittstelle 4 verbunden, wobei die Datenverbindungen zwischen Schnittstelle 4 und Verarbeitungs-/Speichereinrichtung 19 sowie zwischen Display 3 und Verarbeitungs-/Speichereinrichtung 19 bidirektional sind. Auf diese Art und Weise wird eine drahtlose bidirektionale Datenverbindung 5 zwischen dem tragbaren (mobilen) Anzeigegerät 1 und der drahtlosen Schnittstelle 16 der Gebäudesystemtechnik ermöglicht.

Nachfolgend wird die Funktionsweise des tragbaren (mobilen) Anzeige- und Bediengerätes näher erläutert. Auf dem Display 3 des tragbaren Anzeige- und Bediengerätes 1 wird das von der integrierten Kamera 2 aktuell aufgenommene Bild (fortwährend) dargestellt. Die in der Umgebung des tragbaren Anzeige- und Bediengerätes 1 vorhandenen Bediengeräte 7, 8 usw. werden von der Verarbeitungs-/Speichereinrichtung 19 des tragbaren Anzeige- und Bediengerätes1 erkannt und gemäß einer vorteilhaften Weiterbildung werden die erkannten Abbilder der Bediengeräte 7, 8 usw. visuell hervorgehoben, z. B. in Form eines farbigen Rahmens, der von der Verarbeitungs-/Speichereinrichtung 19 an entsprechender Stelle auf das Bild des Displays 3 gelegt wird respektive in das Bild eingeblendet wird. Vorzugsweise wird zusätzlich der aktuelle Status EIN / AUS eines Bediengerätes 7, 8 usw. auf dem Abbild des Bediengerätes angezeigt. Dieser aktuelle Status wird über die drahtlose Datenverbindung 5 von der drahtlosen Schnittstelle 16 der Gebäudesystemtechnik erhalten.

Die Erkennung der Bediengeräte 7, 8 in der mittels Kamera 2 visuell erfassten Umgebung wird mit Hilfe allgemein bekannter Methoden und Algorithmen aus der Bildverarbeitung mittels der Verarbeitungs-/Speichereinrichtung 19 durchgeführt Zusätzlich kann der Nutzer durch Interaktion mit dem tragbaren Anzeige- und Bediengerät 1 festlegen, wo sich Bediengeräte 7, 8 usw. im dargestellten Bild des Displays 3 befinden.

Das tragbare Anzeige- und Bediengerät 1 unterhält eine drahtlose Datenverbindung 5 zu den Geräten der im Gebäude installierten Hausautomationstechnik / Gebäudesystemtechnik, z. B. KNX-Installation. Dies ermöglicht dem tragbaren Anzeige- und Bediengerät 1, über die Datenverbindung 5 und mit Hilfe von Protokollen der Gebäudesystemtechnik, bei den im Bild des Displays 3 erkannten Bediengeräten eine Schalthandlung durchzuführen.

Während einer erstmaligen Anlernphase wird eine Zuordnung zwischen den im Bild des Displays 3 detektierten Bediengeräten - den Abbildern - und den real in der Umgebung vorhandenen Bediengeräten 7, 8 usw. vorgenommen. Als Vorbereitung hierzu überträgt der Nutzer die Parametrierung der Hausautomationstechnik / Gebäudesystemtechnik, z. B. der ETS-Daten (Engineering Tool Software) einer KNX-Installation auf das tragbare Anzeige- und Bediengerät 1. Dies kann in sehr einfacher Weise durch den Anschluss des tragbare Anzeige- und Bediengeräts 1 an den für die Gebäudesystemtechnik relevanten Parametrierungs-PC erfolgen.

Auf Basis der in den Parametrierungs-Daten enthaltenen Bezeichnungen der Bediengeräte 7, 8 usw. kann der Nutzer eine Zuordnung zwischen den im Bild des Displays 3 erkannten Abbildern der Bediengeräte und den realen / physikalischen Bediengeräten 7, 8 usw. der Hausautomationstechnik / Gebäudesystemtechnik vornehmen. Diese Zuordnung wird nachfolgend immer dann verwendet, wenn dasselbe Bediengerät im Bild des Displays 3 erkannt und sein Zustand durch den Nutzer durch eine Schalthandlung verändert / manipuliert wird / werden soll. Zu diesem Zweck unterhält das tragbare Anzeige- und Bediengerät 1 besagte Datenverbindung 5 mit der Gebäudesystemtechnik.

Während der erstmaligen Anlernphase betätigt der Nutzer jedes in der (für das aktuell durch die Kamera 2 erfasste Bild relevanten) Umgebung vorhandene Bediengerät 7, 8 usw. und beaufschlagt (berührt) jeweils unmittelbar danach das Abbild des Bediengerätes auf dem Display 3 des tragbaren Anzeige- und Bediengerätes 1. Die auf diese Weise getroffene Zuordnung wird in der Verarbeitungs-/Speichereinrichtung 19 des tragbaren Anzeige- und Bediengerätes 1 zusammen mit dem detektierten Abbild des Bediengerätes gespeichert.

Für den Fall, dass das Bediengerät 7, 8 usw. mit Hilfe eines auf dem Bediengerät selbst angebrachten oder angezeigten Codes, z. B. Zifferncode, Barcode, identifiziert werden kann, ergibt sich während der erstmaligen Anlernphase die Möglichkeit, diesen Code mit der Kamera 2 des tragbaren Anzeige- und Bediengerätes 1 zu lesen. Durch das Lesen / Abspeichern des Codes kann das tragbare Anzeige- und Bediengerät 1 mittels der Verarbeitungs-/Speichereinrichtung 19 das Abbild des Bediengerätes dem in der Realität vorhandenen Bediengerät 7, 8 usw. zuordnen.

Nach abgeschlossener erstmaliger Anlernphase können alle im Bild des Displays 3 erkannten / detektierten Bediengeräte 7, 8 usw. entsprechend ihres Funktionsumfanges, wie EIN-Schalten, AUS-Schalten, Dimmen, benutzt werden, indem der Nutzer sie als "virtuelle Bediengeräte" im Display 3 des tragbaren Anzeige- und Bediengerätes 1 in gewünschte Weise manipuliert, d. h. auszuführende Schalthandlungen durch Berührung des Abbildes vornimmt.

Der Nutzer manipuliert den Status des betrachteten Bediengerätes 7, 8 usw. über die Interaktion mit dem tragbaren Anzeige- und Bediengerät 1 beispielsweise durch Berühren des Abbildes auf der touch-sensitiven Oberfläche des Displays 3. Diese Manipulation kann ein einziges oder mehrere Bediengeräte 7, 8 usw. oder mehrere anzusteuernde elektrische Geräte 10, 11 usw. gleichzeitig beeinflussen, z. B. beim "Schalten einer Szene" (Lichtszene). Ebenso kann der aktuelle Status als Szene / Makro in der Verarbeitungs-/Speichereinrichtung 19 des tragbaren Anzeige- und Bediengerätes 1 abgespeichert werden.

Zusätzlich zu den in der Umgebung detektierten Bediengeräten 7, 8 usw. können durch den Nutzer während der erstmaligen Anlernphase beliebige Objekte, z. B. Leuchten, im Bild des Displays 3 zu virtuellen Bediengeräten deklariert werden. Hierzu wird im tragbaren Anzeige- und Bediengerät 1 eine Verknüpfung zwischen einem real vorhandenen Bediengerät 7, 8 usw. einerseits und dem zu deklarierenden Objekt andererseits hergestellt. Hiernach kann an Stelle des Bediengerätes 7, 8 usw. auch das deklarierte Objekt unmittelbar für die auszuführende Schalthandlung, verwendet werden, z. B. durch Berühren des Abbildes des deklarierten Objekts auf dem Display 3 des tragbaren Anzeige- und Bediengerätes 1.

### Bezugszeichenliste

- 1: tragbares (mobiles) Anzeige- und Bediengerät
- 2: Kamera
- 3: Display
- 4: drahtlose Schnittstelle zur Gebäudesystemtechnik
- 5: drahtlose Datenverbindung zur drahtlosen Schnittstelle der Gebäudesystemtechnik
- 6: autarke Energieversorgung (Batterie, Akkumulator)
- 7: Bediengerät der Gebäudesystemtechnik (z. B. Wandschalter, Dimmer, KNX-Sensor)
- 8: Bediengerät der Gebäudesystemtechnik
- 9: -
- 10: anzusteuerndes elektrisches Gerät (z. B. Leuchte, Deckenlampe, Jalousie)
- 11: anzusteuerndes elektrisches Gerät
- 12: Aktor
- 13: Aktor
- 14: Wechselspannungsnetz
- 15: -
- 16: drahtlose Schnittstelle der Gebäudesystemtechnik
- 17: Bus der Gebäudesystemtechnik
- 18: -
- 19: Verarbeitungs-/Speichereinrichtung

## Patentansprüche

1. Tragbares Anzeige- und Bediengerät (1) mit einer Kamera (2), einem Display (3), einer Verarbeitungs-/Speichereinrichtung (19), einer autarken Energieversorgung (6) und einer drahtlosen Schnittstelle (4), welche eine bidirektionale drahtlose Datenverbindung (5) zu einer drahtlosen Schnittstelle (16) der Gebäudesystemtechnik herstellt, welche einen Bus (17) mit mehreren daran angeschlossenen Bediengeräten (7, 8) zur Ansteuerung von an den Bus (17) angeschlossenen Aktoren (12, 13) umfasst, an welche anzusteuernde elektrische Geräte (10, 11) angeschlossen sind,
● wobei das Display (3) das aktuell mittels der Kamera (2) aufgenommene Bild eines Raumes oder Teil eines Raumes zeigt,
● wobei die Verarbeitungs- und Speichereinrichtung (19) Abbilder von im Raum physikalisch vorhandenen Bediengeräten (7, 8) der Gebäudesystemtechnik auf Basis angelernter und abgespeicherter Zuordnungen erkennt,
● wobei Schalthandlungen, wie Einschalten / Ausschalten / Dimmen eines an einen Aktor (12, 13) angeschlossenen elektrischen Gerätes (10, 11) durch Berührung des Abbildes durchführbar sind.

2. Tragbares Anzeige- und Bediengerät (1) nach Anspruch 1, **dadurch gekennzeichnet, dass** die Verarbeitungs- und Speichereinrichtung (19) die erkannten Abbilder von im Raum physikalisch vorhandenen Bediengeräten (7, 8) der Gebäudesystemtechnik im Bild des Displays (3) visuell hervorhebt.

3. Tragbares Anzeige- und Bediengerät (1) nach Anspruch 1 und/oder 2, **dadurch gekennzeichnet, dass** die Verarbeitungs- und Speichereinrichtung (19) den aktuellen Status eines erkannten Abbilder eines im Raum physikalisch vorhandenen Bediengerätes (7, 8) der Gebäudesystemtechnik im Bild des Displays (3) zur Anzeige bringt.

4. Tragbares Anzeige- und Bediengerät (1) nach einem der vorstehenden Ansprüche, **dadurch gekennzeichnet, dass** beliebige Objekte zu virtuellen Bediengeräten auf Basis angelernter und abgespeicherter Zuordnungen deklariert sind und eine Verknüpfung zwischen einem vorhandenen Bediengerät (7, 8) und dem deklarierten Objekt hergestellt ist.
